(19) Europäisches Patentamt
European Patent Office
Office européen des brevets

(11) **EP 3 396 477 B1**

(12) **EUROPÄISCHE PATENTSCHRIFT**

(45) Veröffentlichungstag und Bekanntmachung des Hinweises auf die Patenterteilung:
**05.01.2022 Patentblatt 2022/01**

(51) Int Cl.:
**G05B 13/04** *(2006.01)* **G05B 19/418** *(2006.01)*

(21) Anmeldenummer: **18160444.8**

(22) Anmeldetag: **07.03.2018**

(54) **VERFAHREN ZUR BESTIMUNG VON REGELN ZUR CHARAKTERISIERUNG DES NORMALEN BETRIEBSZUSTANDS EINES ARBEITSPROZESSES**

METHOD FOR DETERMINING RULES FOR CHARACTERIZING THE NORMAL OPERATING STATE OF A WORK PROCESS

PROCÉDÉ DE DÉTERMINATION DE RÈGLES POUR CARACTÉRISER L'ÉTAT DE FONCTIONNEMENT NORMAL D'UN PROCESSUS DE TRAVAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2017 AT 502332017**

(43) Veröffentlichungstag der Anmeldung:
**31.10.2018 Patentblatt 2018/44**

(73) Patentinhaber: **AIT Austrian Institute of Technology GmbH**
**1210 Wien (AT)**

(72) Erfinder:
• **Wurzenberger, Markus**
**1100 Wien (AT)**
• **Skopik, Florian**
**3701 Großweikersdorf (AT)**

(74) Vertreter: **Wildhack & Jellinek**
**Patentanwälte OG**
**Landstraßer Hauptstraße 50**
**1030 Wien (AT)**

(56) Entgegenhaltungen:
EP-A1- 2 801 936  WO-A1-2016/145089
US-A1- 2009 292 506  US-A1- 2012 095 582
US-B1- 6 760 716

EP 3 396 477 B1

**Beschreibung**

Die Erfindung betrifft ein Verfahren zur Ermittlung und Übertragung bzw. Anpassung von Regeln zur Charakterisierung eines normalen Betriebszustands eines Arbeitsprozesses gemäß dem Oberbegriff des Patentanspruchs 1.

Die stetig zunehmende Digitalisierung bzw Automatisierung von industriellen Prozessen beschleunigt und vereinfacht zwar Produktionsprozesse und Fertigung, macht aber beispielsweise die Wartung von Maschinen und Fertigungsstraßen aufgrund der zunehmenden Komplexität immer schwieriger bzw. aufwändiger. Die zunehmende Anzahl von Sensoren pro Meter einer Fertigungsstraße macht es unmöglich, alle zur Verfügung stehenden Daten manuell zu erfassen und zu beurteilen. Daher wird der Fokus vermehrt auf die Entwicklung von Methoden beispielsweise zur prädiktiven Instandhaltung gelegt, die dabei helfen, Produktionsprozesse und Wartungen zu optimieren und sich anbahnende Fehler zu erkennen, bevor Ausfälle auftreten. Andererseits können derartige Methoden auch dazu genutzt werden, Produktionsprozesse zu optimieren, da Anomalien auch durch suboptimale Prozess-Konfigurationen hervorgerufen werden können, die Spielraum für Optimierungen des Maschinenbetriebes bieten.

Die US 6760716 B1 offenbart, wie ein adaptives Vorhersagemodell eingesetzt werden kann, um das Verhalten eines Systems, insbesondere dessen Prozessparameter basierend auf vorgenommenen Messungen, vorauszusagen, wobei gleichzeitig lineare und nicht-lineare Fehler kompensiert werden können.

Die US 2012/0095582 A1 offenbart ein Verfahren zum Matching von Kammern in der Produktion von Halbleitern und wie unter gleichartigen Kammern jene identifiziert wird, welche einen vorgegebenen Prozess bestmöglich unterstützt, um die vorgegebenen Betriebsparameter dieser Kammer auf andere gleiche Kammern zu übertragen.

Die EP 2801 936 A1 offenbart ein cloudbasiertes Simulationsservice, das Daten einer Vielzahl von Kunden speichert und analysiert. Basierend auf den Daten wird ein Simulationsmodell erstellt werden kann, um z.B. Gerätemodifikationen, -erweiterungen, und -konfigurationsänderungen in einer Cloud-Plattform zu testen.

Die WO 2016/145089 A1 offenbart ein Verfahren und eine Vorrichtung zur Modellerstellung mittels maschinellen Lernens basierend auf der Beobachtung von Betriebsdaten.

Die US 2009/0292506 A1 offenbart ein Verfahren und eine Vorrichtung, um Prozesse zu beobachten, zu optimieren und ggf. Probleme mit einem Werkzeug zur Bearbeitung eines Werkstücks zu diagnostizieren.

Aus dem Stand der Technik, beispielsweise aus Hartung, Joachim, Bärbel Elpelt, and Karl-Heinz Klösener. Statistik: Lehr- und Handbuch der angewandten Statistik. Walter de Gruyter, 2009 und Murphy, Kevin P. Machine learning: a probabilistic perspective. MIT press, 2012 sind eine Vielzahl an Methoden aus den Bereichen Statistik und Machine Learning bekannt, die beispielsweise für Prozess- und Wartungsoptimierung genutzt werden können. Bei derartigen Verfahren aus dem Stand der Technik werden zunächst Kennzeichen eines normalen Betriebszustands, auch als "Ground Truth" bezeichnet, ermittelt. Diese beschreiben den normalen Betriebszustand einer Maschine während eines Arbeitsprozesses anhand von Zusammenhängen von während des normalen Betriebszustands ermittelten Messwerten und sind während des normalen Betriebszustands gültig. Abweichungen von der "Ground Truth" werden von einem derartigen Verfahren als anomale Zustände der Maschine erkannt und als Hinweise auf defekte Maschinenbauteile oder Fehlkonfigurationen des Arbeitsprozesses der Maschine gedeutet.

Bei aus dem Stand der Technik bekannten Verfahren wird allerdings vorausgesetzt, dass spätestens bei Inbetriebnahme einer Maschine bekannt ist, beispielsweise in welchem Bauteil der Maschine welche Fehler identifiziert werden sollen und durch Messung welcher physikalischer Größen diese zu erkennen sind, wobei üblicherweise nur einzelne Maschinenbauteile oder -bauteilgruppen und nicht Zusammenhänge, die die gesamte Maschine betreffen, betrachtet werden. Auch die Überführung einer erfolgreich eingesetzten Methode auf eine Maschine desselben Typs, die geringfügige bauliche Veränderungen aufweist oder in einem anderen Einsatzgebiet verwendet wird, erweist sich als nahezu unmöglich und individuelle Anpassungen sind notwendig, um die Methoden aufwändig nachzujustieren. Ein weiteres Problem stellt der Umstand dar, dass dieselbe Maschine in den meisten Fällen zur Produktion unterschiedlicher Produkte und Aufträge genutzt wird und das verwendete Rohmaterial nicht immer derselben Qualität entspricht und daher zu Variabilitäten im Produktionsprozess führen kann. Dieselbe Maschine kann auch in Ländern in unterschiedlichen geographischen Breiten genutzt werden, wodurch Maschinen desselben Typs unweigerlich auch unterschiedlichen Umwelt- und Klimaeinflüssen ausgesetzt sind und somit der normale Betriebszustand einer Maschine schwer zu erfassen ist.

Aufgabe der vorliegenden Erfindung ist es daher, diese Probleme zu lösen und ein Verfahren bereitzustellen, bei dem Regeln für den normalen Betriebszustand von Maschinen während der jeweiligen Arbeitsprozesse aufgestellt werden und die Regeln automatisch auf beispielsweise unterschiedliche Aufträge, die auf derselben Maschine durchgeführt werden, unterschiedliche Umgebungsbedingungen, denen die Maschinen ausgesetzt sind oder auch auf andere, überwiegend baugleiche Maschinen übertragen und angepasst werden.

Diese Aufgaben werden bei einem Verfahren zur Ermittlung und Übertragung bzw. Anpassung von Regeln zur Charakterisierung eines normalen Betriebszustands eines Arbeitsprozesses in Form eines Produktionsprozesses oder Fertigungsprozesses, wobei

- ein Standardprozess mit einer als Standardmaschine genutzten Maschine in der Standardumgebung mit externen Standardvorgaben gestartet wird,

  - wobei der auf der Standardmaschine durchgeführte Prozess als Standardprozess und eine Arbeitsumgebung, in der sich die Standardmaschine befindet, als Standardumgebung und die externen Vorgaben für die Standardmaschine als externe Standardvorgaben bezeichnet werden, und wobei die externen Vorgaben Vorgaben für die Durchführung eines Auftrags auf der Standardmaschine sind,
  - wobei die Standardmaschine eine Anzahl von Attributen in Form von Messwerten und externen Vorgaben, und optional Randbedingungen, Umgebungsparametern und/oder zeitunabhängigen Attributen, besitzt,

    - wobei die Standardmaschine über eine Anzahl von Sensoren verfügt,
    - wobei mit den Sensoren der Standardmaschine wiederholt zu vorgegebenen Zeitpunkten Messwerte ermittelt werden, und
    - in einer Lernphase automatisiert auf der Standardmaschine nach Regeln gesucht wird,

  - wobei die Attribute als Eingangsparameter für die Regeln verwendet werden,
  - wobei die Regeln den Zusammenhang zwischen den von den Sensoren der Standardmaschine ermittelten Messwerten untereinander und/oder den Zusammenhang zwischen den ermittelten Messwerten und den Umgebungsparametern beschreiben und
  - wobei die Regeln während des normalen Betriebszustands der Standardmaschine in der betreffenden Standardumgebung mit den externen Standardvorgaben erfüllt sind,
    durch die kennzeichnenden Merkmale des Anspruchs 1 gelöst.

Die Erfindung sieht dabei vor,

- dass in einer zentralen Schaltstelle die in der Lernphase ermittelten Regeln der Standardmaschine in Form eines Regelsets gespeichert werden, und
- dass ein Arbeitsprozess auf einer der Standardmaschine ähnlichen oder identischen Maschine in einer Arbeitsumgebung mit externen Vorgaben durchgeführt wird,

  - wobei die externen Vorgaben und Umgebungsparameter zur Durchführung eines Auftrags auf der Maschine durch Attribute festgelegt sind, und
  - wobei die Maschine Sensoren zur Messung physikalischer Parameter an vorgegebenen Positionen im Bereich der Maschine aufweist,

    - wobei die Maschine der Standardmaschine ähnlich ist, wenn zumindest einer der folgenden Punkte zutrifft:

      a) dass die Maschine im Vergleich zur Standardmaschine hinzugefügte Bauteile und/oder Sensoren aufweist,
      b) dass bei der Maschine im Vergleich zur Standardmaschine Bauteile und/oder Sensoren fehlen,
      c) dass die Maschine im Vergleich zur Standardmaschine modifizierte Bauteile aufweist,
      d) dass bei der Maschine im Vergleich zur Standardmaschine Sensoren neu positioniert oder hinsichtlich ihrer Sensitivität oder Kalibrierung geändert sind,

    - wobei die Maschine über eine Anzahl von Sensoren der Maschine verfügt, deren Position und Sensitivität mit den auf der Standardmaschine befindlichen Sensoren zumindest teilweise übereinstimmt und mit den Sensoren der Maschine wiederholt zu vorgegebenen Zeitpunkten Messwerte ermittelt werden,
    - wobei für den Arbeitsprozess mit externen Vorgaben in der Arbeitsumgebung der der Standardmaschine ähnlichen oder identischen Maschine ein geeignetes in der zentralen Schaltstelle gespeichertes Regelset ausgewählt wird, wobei das Regelset nach Übereinstimmung der Sensoren und/oder der Umgebungsparameter der Arbeitsumgebung und/oder der externen Vorgaben der Maschine ausgewählt wird, indem

      - auf der Maschine diejenigen Sensoren der Maschine ermittelt werden, die hinsichtlich Anordnung und Sensitivität einem Sensor der Standardmaschine paarweise zuordenbar sind, und diejenigen externen Vorgaben und Umgebungsparameter der Maschine ermittelt werden, die mit den externen Standardvorgaben und Umgebungsparametern der Standardmaschine übereinstimmen, um diejenigen Regeln zu identifizieren, die auf der Standardmaschine genutzt werden und auch auf der Maschine genutzt werden können, da die Regeln dieselben Attribute wie auf der Standardmaschine betreffen,

- wobei die in der zentralen Schaltstelle gespeicherten für den Standardprozess in der Lernphase ermittelten Regeln der Standardmaschine automatisiert auf den Arbeitsprozess der Maschine in der Arbeitsumgebung übertragen werden und
- wobei auf der Maschine untersucht wird, ob die übermittelten Regeln durch die Messwerte derjenigen Sensoren der Maschine, die mit den Sensoren der Standardmaschine hinsichtlich Anordnung und Sensitivität übereinstimmen, erfüllt sind, und ob die übermittelten Regeln durch die externen Vorgaben der Maschine, die mit den externen Standardvorgaben der Standardmaschine übereinstimmen, erfüllt sind, und

- wenn dies der Fall ist, die Regeln zur Charakterisierung des normalen Betriebszustands des Arbeitsprozesses übernommen werden, und
- sofern dies nicht der Fall ist, die Regeln in einer Lernphase an die neuen Messwerte der Maschine und/oder an die neuen externen Vorgaben der Maschine angepasst oder verworfen werden.

Um die Anzahl an übertragenen Regeln nicht unnötig hoch werden zu lassen, ist vorteilhafterweise vorgesehen, dass untersucht wird, ob bei der Standardmaschine Sensoren vorhanden sind, denen hinsichtlich Anordnung und Sensitivität kein Sensor der Maschine zuordenbar ist, wobei im Falle des Fehlens von zuordenbaren Sensoren bei der Maschine die Regeln, die für diese Sensoren bei der Standardmaschine gelten, gestrichen werden.

Für den Fall, dass dieselbe physikalische Größe auf der Standardmaschine und der Maschine mit Sensoren mit unterschiedlicher Funktionsweise ermittelt wird, ist vorteilhafterweise vorgesehen, dass untersucht wird, ob einander zugeordnete Sensoren der Maschine dieselbe Kennlinie hinsichtlich der zu ermittelnden physikalischen Größe aufweisen, wobei im Fall einander zugeordneter Sensoren der Maschine mit einer unterschiedlichen Kennlinie diejenigen Regeln, die für diese Sensoren bei der Standardmaschine gültig sind, an die neue Kennlinie der Maschine angepasst werden.

Eine besonders flexible Anwendung der Erfindung ist gewährleistet dadurch, dass untersucht wird, ob bei der Maschine Sensoren vorhanden sind, denen hinsichtlich Anordnung und Sensitivität kein Sensor der Standardmaschine zuordenbar ist, dass für die Messwerte der so ermittelten Sensoren der Maschine neue Regeln aufgestellt werden, die den normalen Betriebszustand charakterisieren, wobei insbesondere diese Regeln auf dieselbe Weise erstellt werden, die auch für die Erstellung von der Regeln für die Messwerte des Standardprozesses verwendet werden, wobei diese Regeln insbesondere auch Messwerte von Sensoren berücksichtigen können, die sowohl auf der Maschine, als auch auf der Standardmaschine vorhanden sind.

Für eine Anwendung der Erfindung auf Maschinen in beispielsweise unterschiedlichen geographischen Breiten und Klimazonen ist vorteilhafterweise vorgesehen, dass der Arbeitsprozess festgelegt wird, in dem die Maschine oder die Standardmaschine in einer von der Standardumgebung abweichenden Arbeitsumgebung betrieben wird, wobei sich die Arbeitsumgebung von der Standardumgebung insbesondere hinsichtlich der folgenden Umgebungsparameter unterscheidet:

a) Umgebungstemperatur, und/oder
b) Umgebungsluftfeuchtigkeit, und/oder
c) Umgebungsluftdruck.

Ein erfindungsgemäßes Verfahren kann, sofern die übermittelten Regeln durch die externen Vorgaben der Maschine, die mit den externen Standardvorgaben der Standardmaschine übereinstimmen, nicht erfüllt sind, für diese neuen externen Vorgaben neue Regeln festlegen.

Zur Erkennung suboptimaler Prozess-Konfigurationen oder sich anbahnender Fehler, bevor Ausfälle auftreten, sieht die Erfindung vor, dass die Maschine in der Arbeitsumgebung betrieben wird, dass während des Arbeitsprozesses zu vorgegebenen wiederkehrenden Zeitpunkten Messwerte ermittelt werden, dass die für den Arbeitsprozess ermittelten Regeln auf die Messwerte angewendet werden, und falls Messwerte vorhanden sind, die den Regeln für den normalen Betriebszustand nicht genügen, ein anomaler Zustand der Maschine und/oder des Arbeitsprozesses identifiziert wird.

Eine weitere vorteilhafte Ausführungsform der Erfindung sieht vor, dass auf zumindest zwei Standardmaschinen Regeln ermittelt werden, die den Zusammenhang der ermittelten Messwerte während des normalen Betriebszustands der Standardmaschinen in den betreffenden Arbeitsumgebungen mit den externen Vorgaben beschreiben, und die während der normalen Betriebszustände erfüllt sind, und wobei die für zumindest zwei Standardmaschinen ermittelten Regeln auf den Arbeitsprozess einer den Standardmaschinen ähnlichen oder identischen Maschine in der Arbeitsumgebung übertragen werden.

Um Regelsets vielfältiger Standardmaschinen nutzen zu können und eine einfache Übertragung von Regeln sicherzustellen, ist vorgesehen, dass in der zentralen Schaltstelle Regelsets gespeichert werden, die Regelsets die Zusammenhänge der ermittelten Messwerte während der normalen Betriebszustände einer Vielzahl von Standardmaschinen in den betreffenden Arbeitsumgebungen mit den externen Vorgaben beschreiben, und die während der normalen Betriebszustände erfüllt sind, wobei für den Arbeitsprozess einer den Standardmaschinen ähnlichen oder identischen Maschine geeignete Regelsets ausgewählt werden, und wobei die ausgewählten Regelsets auf den Arbeitsprozess der Maschine in der Arbeitsumgebung übertragen werden.

Auf einem Datenträger ist ein Programm zur Durchführung eines erfindungsgemäßen Verfahrens abgespeichert.

Weitere Vorteile und Ausgestaltungen der Erfindung ergeben sich aus der Beschreibung und den beiliegenden Zeichnungen. Die Erfindung ist im Folgenden anhand von besonders vorteilhaften

Ausführungsbeispielen dargestellt und wird unter Bezugnahme auf die Zeichnungen beispielhaft beschrieben.

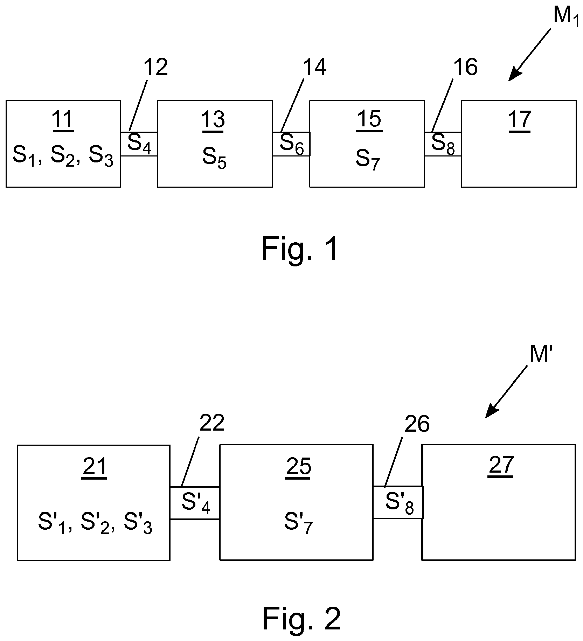

Eine besonders vorteilhafte Ausführungsform eines erfindungsgemäßen Verfahrens wird in Zusammenhang mit **Fig.** 1 und **Fig.** 2 näher dargestellt.

Fig. 1 zeigt schematisch eine Maschine $M_1$; die eine Einzugs-Einheit 11 besitzt, an der sich drei Sensoren $S_1$; $S_2$, $S_3$ befinden, wobei die Einzugs-Einheit 11 über beispielsweise einen ersten Förderband-Abschnitt 12 mit einer Druck-Einheit 13 verbunden ist, wobei sich auf dem ersten Förderband-Abschnitt 12 ein Sensor $S_4$ und auf der Druck-Einheit 13 ein weiterer Sensor $S_5$ befinden. Diese Maschine $M_1$ wird im Rahmen des dargestellten Ausführungsbeispiels später als Standardmaschine benutzt. Die Druck-Einheit 13 ist über einen zweiten Förderband-Abschnitt 14 mit einer Stanzungs-Einheit 15 verbunden, wobei sich auf dem zweiten Förderband-Abschnitt 14 ein Sensor $S_6$ und auf der Stanzungs-Einheit 15 ein Sensor $S_7$ befinden. Die Stanzungs-Einheit 15 ist schließlich über einen dritten Förderband-Abschnitt 16 mit einer Auswurf-Einheit 17 verbunden, wobei sich auf dem dritten Förderband-Abschnitt 16 ein Sensor $S_8$ befindet. Eine derartig aufgebaute Maschine $M_1$ kann beispielsweise zum Bedrucken und Stanzen von Wellpappeplatten genutzt werden. Die Maschine $M_1$ wird im Beispiel durch einen Keilriemen angetrieben und die Druck-Einheit 13 umfasst eine Fixierwalze.

Folgende Vorgangsweise wird von derartigen Verfahren üblicherweise für die Festlegung des normalen Betriebszustands einer Maschine $M_1$ als "Ground Truth" benutzt:

Zuerst wird eine Parametrisierung durchgeführt, wobei der betreffenden Maschine $M_1$ eine Anzahl von n Attributen zugewiesen wird. Die einzelnen Attribute werden im vorliegenden Ausführungsbeispiel der Erfindung mit einer Attributidentifikation i in Form einer vorgegebenen natürlichen Zahlen, beispielsweise im Zahlenbereich zwischen 1 und n versehen.

Im Folgenden werden beliebig gewählte Zeitpunkt mit t bezeichnet, wobei ein solcher Zeitpunkt t aus einer Menge $\{T_0, T_1, T_2, ...\}$ gewählt ist.

Zu einer vorgegebenen Anzahl von diskreten Zeitpunkten t wird während des Betriebs der Maschine $M_1$ für jedes einzelne Attribut mit der Attributidentifikation i jeweils ein Attributwert $x_1^t$ festgelegt. Die Zeitpunkte werden dabei ausgehend von einem Initialzeitpunkt $T_0$ bis zum Zeitpunkt T, der letzten Erfassung von Attributwerten bezeichnet. Entsprechend der jeweils verwendeten Attributidentifikation i werden die einzelnen für den betreffenden Zeitpunkt t zur Verfügung stehenden konkreten Werte in einem dem Zeitpunkt t zugeordneten Zeilenvektor $m' = [x_1^t, ... x_n^t]$ eingetragen.

Die einzelnen Zeilenvektoren $m'$ werden durch Aneinanderreihung in der Reihenfolge ihrer Aufnahme zu einer Maschinen-Attribut-Matrix $A_M$ zusammengefasst, wobei T' den Zeitpunkt der letzten Aufnahme bezeichnet.

$$A_M = \begin{pmatrix} m^1 \\ \vdots \\ m^{T'} \end{pmatrix} = \begin{pmatrix} x_1^1 & \cdots & x_n^1 \\ \vdots & \ddots & \vdots \\ x_1^{T'} & \cdots & x_n^{T'} \end{pmatrix}$$

Bei einem Attribut handelt es sich um einen Messwert, der von einem der Maschine $M_1$ zugeordneten Sensor erstellt wurde. Im vorliegenden Ausführungsbeispiel der Erfindung ermitteln Sensoren $S_1,...S_8$ wiederholt zu vorgegebenen Zeitpunkten t physikalische Messwerte. Den Attributidentifikationen i = 1..8 werden die von den Sensoren $S_1,...S_8$, die in Tabelle 1 näher erläutert sind, ermittelten Messwerten zugewiesen, dh die von den Sensoren ermittelten Messwerte werden zu den betreffenden Zeitpunkten t in die Spalten i=1..8 in den betreffenden Zeilenvektor $m^t$ eingetragen.

Tabelle 1: Sensoren, physikalische Messwerte und Messwert-Einheiten der Maschine $M_1$.

| $S_1$ | Drehzahl (min$^{-1}$) | Motor der Maschine antreibt (Walze $r$ = 0.1 m) |
|-------|----------------------|------------------------------------------------|
| $S_2$ | Endtaster (binär) | Gibt an ob Karton eingezogen wird oder nicht |
| $S_3$ | Geschwindigkeit (m/s) | Gibt die Geschwindigkeit an, mit der Karton eingezogen wird |
| $S_4$ | Geschwindigkeit (m/s) | Gibt die Geschwindigkeit an, mit der Karton fortbewegt wird |
| $S_5$ | Temperatur (°C) | Oberflächentemperatur der Fixierwalze |

(fortgesetzt)

| S$_1$ | Drehzahl (min$^{-1}$) | Motor der Maschine antreibt (Walze $r$ = 0.1 m) |
|---|---|---|
| S$_6$ | Geschwindigkeit (m/s) | Gibt die Geschwindigkeit an, mit der Karton fortbewegt wird |
| S$_7$ | Druck (bar) | Gibt an mit welchem Druck gestanzt wird |
| S$_8$ | Geschwindigkeit (m/s) | Gibt die Geschwindigkeit an, mit der Karton fortbewegt wird |

Weiters ist ein Attribut durch externe Vorgaben festgelegt und ein Attribut kann durch Randbedingungen festgelegt sein, die sich über die Zeit verändern können, wie beispielsweise eine Auftragsnummer, eine Voreinstellung wie beispielsweise die bei der Durchführung des Auftrags zu verwendende Stanzkraft oder ein externer, nicht mittels eines an der Maschine M$_1$ befindlichen Sensors zu ermittelnder Sensormesswert, wie beispielsweise die Umgebungstemperatur oder Umgebungsluftfeuchtigkeit.

Die externen Vorgaben zur Durchführung eines Auftrags auf der Maschine M$_1$ und die Umgebungsparameter wie beispielsweise Umgebungstemperatur und/oder Umgebungsluftfeuchtigkeit und/oder Umgebungsluftdruck, denen die Maschine M$_1$ während eines Produktionsprozesses ausgesetzt ist, sind durch vier Attribute A$_1$, A$_2$, A$_3$, A$_4$ gekennzeichnet. Die Attribute der Maschine M$_1$; die externe Vorgaben und Umgebungsparameter beschreiben, sind in Tabelle 2 näher erläutert.

Tabelle 2: Attribute der Maschine M$_1$; die externe Vorgaben und Umgebungsparameter betreffen.

| A$_1$ | Kartondicke (mm) |
|---|---|
| A$_2$ | Größe (1 in cm x b in cm) |
| A$_3$ | Farbe (binär) |
| A$_4$ | Relative Luftfeuchtigkeit (%) |

Für diese Attribute ermittelte Werte werden zu den betreffenden Zeitpunkten t in die Spalten i=9...12 in den betreffenden Zeilenvektor m' eingetragen.

Bei den Attributen kann es sich schließlich um zeitunabhängige Attribute handeln, wie beispielsweise um eine Identifikation ID und/oder einen Maschinentyp. Diese Attribute sind für die betreffende Maschine M$_1$ festgelegt und unveränderlich, d.h. ist das Attribut mit der Attributidentifikation i zeitunabhängig, so ist $x_i^1 = x_i^2 = ... = x_i^T$. Für diese Attribute ermittelte Werte werden zu den betreffenden Zeitpunkten t in die Spalten i=13..14 in den betreffenden Zeilenvektor m$^t$ eingetragen.

Der normale Betriebszustand einer Maschine M$_1$ wird bei einem derartigen Verfahren üblicherweise mit einem Regelset **R** beschrieben, wobei beispielsweise folgende Typen von Regeln aus dem Stand der Technik verwendet werden:

- statistische Regeln *siehe* Georgii, Hans-Otto. Stochastik: Einführung in die Wahrscheinlichkeitstheorie und Statistik. Walter de Gruyter GmbH & Co KG, 2015. Hartung, Joachim, Bärbel Elpelt, and Karl-Heinz Klösener. Statistik: Lehr- und Handbuch der angewandten Statistik. Walter de Gruyter, 2009.,
- Korrelations-Regeln *siehe* Friedberg, Ivo, et al. "Combating advanced persistent threats: From network event correlation to incident detection." Computers & Security 48 (2015): 35-57., *oder* Skopik F., Fiedler R. (2016): EP 1416597.2-1853 - Method for detecting deviations from a given standard state, June 2016.,
- neuronale Netzwerk-Modelle *siehe* Rojas, Raul. Theorie der neuronalen Netze: eine systematische Einführung. Springer-Verlag, 2013.,
- Regressionsmodelle *siehe* Fahrmeir, Ludwig, Thomas Kneib, and Stefan Lang. Regression: Modelle, Methoden und Anwendungen. Springer-Verlag, 2007.

**Statistische Regeln** charakterisieren ein einzelnes Attribut einer Maschine M$_1$, wobei eine Sequenz $(x_i^t)_{t \in Z}$ eines Attributes mit $i \in \{1,...,n\}$ über eine endliche Zeitspanne Z betrachtet wird. Eine Regel R wird ausgehend von den Werten, die das Attribut $x_i$ in der sogenannten Trainingsphase $Z_0$ annimmt, aufgestellt. Eine derartige Regel R definiert beispielsweise ein Intervall, innerhalb dessen der Mittelwert der Werte des Attributs in einer Zeitspanne Z, betrachtet wird, oder mit welcher Wahrscheinlichkeitsverteilung die Verteilung der Werte des Attributs in einer Zeitspanne Z beschrieben wird. Statistische Tests wie z. B. ein Kolmogorov-Smirnov Test, *siehe* Hartung, Joachim, Bärbel Elpelt, and Karl-Heinz Klösener. Statistik: lehr-und handbuch der angewandten statistik. Walter de Gruyter, 2009, können dazu verwendet werden.

Mit einer nach dem Stand der Technik aufgestellten statistischen Regel kann beispielsweise der Mittelwert $\overline{X_i^{Z_0}}$ einer Stichprobe in der Trainingsphase $Z_0$ berechnet werden als

$$\overline{X_i^{Z_0}} = \sum_{t \in Z_0} x_i^t.$$

Unter der Annahme, dass die Stichprobe repräsentativ ist, wird ein Intervall festgelegt, das einen Toleranzbereich von zwei Mal $\alpha 100\%$ erlaubt. Die entsprechende Regel wird festgelegt als

$$R((x_i^t)_{t \in Z}) : \text{if } \overline{X_i^Z} \notin [\overline{X_i^{Z_0}} - \alpha \overline{X_i^{Z_0}}, \overline{X_i^{Z_0}} + \alpha \overline{X_i^{Z_0}}] \Rightarrow \text{Alarm!}$$

Um die Repräsentativität des geschätzten Mittelwerts zu überprüfen, kann auch ein Konfidenzintervall anstelle einer Punktschätzung berechnet werden.

Bei aus dem Stand der Technik bekannten **Korrelations-Regeln** wird beispielsweise ein Attribut $x_i$ zu einem Zeitpunkt $T_1$ oder zu mehreren Zeitpunkten $T_1$, $T_2$,..., d.h. zwei oder mehr Werte einer Spalte der Maschinen-Attribut-Matrix $A_M$, betrachtet, wobei Korrelations-Regeln der Form $R(x_i^{T_1}, x_i^{T_2}) : \text{if not } (x_i^{T_1} < a \Rightarrow x_i^{T_2} > b) \Rightarrow \text{alarm!}$ aufgestellt werden. Es können auch zwei oder mehr verschiedene Attribute zu einem Zeitpunkt $T_1$, d.h. zwei oder mehr Werte einer Zeile der Maschinen-Attribut-Matrix $A_M$, betrachtet werden, wobei sich Korrelations-Regeln der Form $R(x_i^{T_1}, x_j^{T_1}) : \text{if not } (x_i^{T_1} < a \Rightarrow x_j^{T_1} > b) \Rightarrow \text{alarm!}$ ergeben. Bei einer weiteren Variante der Erstellung von Korrelations-Regeln werden zwei oder mehr verschiedene Attribute zu zwei oder mehr Zeitpunkten $T_1$, $T_2$,..., d.h. Werte aus verschiedenen Spalten und verschiedenen Zeilen der Maschinen-Attribut-Matrix $A_M$, betrachtet, wobei Korrelations-Regeln der Form $R(x_i^{T_1}, x_j^{T_2}) : \text{if not } (x_i^{T_1} < a \Rightarrow x_j^{T_2} > b) \Rightarrow \text{alarm!}$ aufgestellt werden.

**Neuronale Netzwerk-Modelle** werden im Stand der Technik benutzt, um den aktuellen Zustand einer Maschine $M_1$, eines Maschinenbauteils oder eines auf der Maschine $M_1$ durchgeführten Arbeitsprozesses einzuschätzen. Neuronale Netzwerke werden trainiert und als Eingangsparameter werden die Werte ausgewählter Attribute $(x_i)_{i \in I}$ der Maschine $M_1$ verwendet, wobei I ein Set an Attributen ist. Mit neuronalen Netzwerk-Modellen werden Regeln der Form if $R((x_i)_{i \in I}) \geq \alpha \Rightarrow$ no alarm! V if $R((x_i)_{i \in I}) < \alpha \Rightarrow$ alarm! erstellt.

**Regressionsmodelle** werden mittels Regressionsanalyse erstellt und im Stand der Technik für die Vorhersage des Zustands einer Maschine $M_1$; eines Maschinenbauteils oder eines auf der Maschine $M_1$ durchgeführten Arbeitsprozesses verwendet. Ähnlich wie bei neuronalen Netzwerk-Modellen, werden auch für Regressionsmodelle Werte eines definierten Zeitintervalls $Z = [T_0, T'](x_i^Z)_{i \in I}$ ausgewählter Attribute der Maschine $M_1$ als Eingangsparameter verwendet, wobei I ein Set an Attributen ist, um den Zustand der Maschine $M_1$ nach der bis T' vergangenen Zeit vorherzusagen. Mit Regressionsmodellen werden beispielsweise Regeln der Form $R((x_i)_{i \in I}^Z) = \text{state at } T' + \Delta t$ erstellt.

In einem ersten Ausführungsbeispiel eines erfindungsgemäßen Verfahrens wird die Maschine $M_1$ als Standardmaschine genutzt, wobei der auf der Maschine $M_1$ durchgeführte Prozess als Standardprozess und die Arbeitsumgebung, in der sich die Maschine $M_1$ befindet, als Standardumgebung und die externen Vorgaben für die Maschine $M_1$ als externe Standardvorgaben betrachtet werden.

Sobald sich die Maschine $M_1$ in einem stabilen Zustand befindet, d.h. beispielsweise nach einer Anfahrphase, sieht ein derartiges Verfahren als ersten Schritt vor, dass in einer Lernphase nach beispielsweise den voranstehend beschriebenen Methoden nach Regeln für die Maschine $M_1$; d.h. die Standardmaschine, gesucht wird. Die Regeln beschreiben dabei den Zusammenhang der von den Sensoren $S_1$,...$S_8$ ermittelten Messwerte und den Zusammenhang der ermittelten Messwerte und der Umgebungsparameter während des normalen Betriebszustands der Maschine $M_1$ in der betreffenden Arbeitsumgebung mit den externen Vorgaben und sind während des normalen Betriebszustands der Maschine $M_1$ erfüllt. Für die Maschine $M_1$ können beispielsweise alle Attribute $X_M$ als Eingangsparameter für eine Regel verwendet werden und Regeln für die Maschine $M_1$ besitzen die generelle Form $R_M = R(X_M)$.

Das im vorliegenden Fall erlernte Regelset $\mathbf{R_{M1}}$ für die Maschine $M_1$ beinhaltet acht Regeln. Die Regeln $R$,...$R_8$ haben die folgende Form, wobei $T_i$ die Zeitpunkte mit $\Delta t = T_{i+1} - T_i = 0.5s$ markiert, an denen Messwerte von den Sensoren $S_1$,...$S_8$ gesammelt werden:

- $R_1(S_1, S_3)$ : $S_1$ E [24.9,25.1] min-1 $\Rightarrow$ $S_3$ > 0.25 m/s; $\left(v = 2r\pi \frac{x\ \min^{-1}}{60}\right)$
- $R_2(A_2, S_3)$ : $l$ = 50cm $\Rightarrow$ $S_3$ < 0.262m/s
- $R_3(i, S_2)$ : $5 \leq \sum_{j=i-9}^{i} S_2(T_j) \leq 8$
- $R_4(A_3, S_5)$ : $A_3$ = 1 $\Rightarrow$ $S_5 \in$ [178,182]°C
- $R_5(A_1, S_7)$ : $A_1$ = 3 mm $\Rightarrow$ $S_7 \in$ [9.8,10.2] bar
- $R_6 (S_3, S_4, S_6, S_8)$ : 0.25 m/s < $S_3 \leq S_4 \leq S_6 \leq S_8$
- $R_7(i, S_1)$ : $i > 1000 \Rightarrow \frac{1}{1000} \sum_{j=i-999}^{i} S_1(T_j) \in [24.95, 25.05]\ \min^{-1}$
- $R_8 (A_4, S_7)$ : $A_4$ > 40% $\Rightarrow$ $S_7$ > 10 bar

Regel $R_3$ kontrolliert beispielsweise, ob innerhalb von 10 Zeitschritten ausreichend Kartons eingezogen werden, bzw. ob der Einzug 11 ausreichend lange geöffnet ist, wobei für einen Karton von einer Öffnungsdauer der Einzugs-Einheit 11 von ca. 3 Sekunden ausgegangen wird. Im Fall einer beispielsweise zu langen Öffnungsdauer der Einzugs-Einheit 11 würden zu viele Kartons eingezogen.

Zur Übertragung der für die Maschine $M_1$, d.h. die Standardmaschine, aufgestellten Regeln $R_1,...R_8$ sieht ein erfindungsgemäßes Verfahren als nächsten Schritt vor, dass die Regeln $R_1,...R_8$ zunächst in abstrakter Form dargestellt werden. Ausgehend von der Menge an Attributen der Maschine $M_1$ $\mathbb{X}_{M_1} = \{S_1, S_2, \ldots S_8, A_1, A_2, A_3, A_4\}$ und dem erlernten Regelset $\mathbf{R_M}$ für die Maschine $M_1$ $\mathbf{R}_{M1} = \{R_1,..., R_8\}$, wird eine Funktion $X(R) : \mathbf{R} \rightarrow \mathbb{X}$ definiert, die alle Attribute liefert, die eine Regel als Eingangsparameter verwendet. Außerdem wird eine zweite Funktion $R(X_I) : \mathbb{X} \rightarrow \mathbf{R}$ aufgestellt, die alle Regeln liefert, die Attribute der Menge $X_I$ als Eingangsparameter benutzen, wobei I ein Indexset darstellt. Als nächster Schritt eines erfindungsgemäßen Verfahrens werden alle variablen Regelattribute in einer Lernphase erlernt. Im Falle einer Korrelations-Regel können beispielsweise Parameter a, b, ... als variable Attribute eingeführt sein (siehe abstrakte Regeln nächster Absatz).

Im Folgenden werden die für die Maschine $M_1$ gültigen Regeln $R_1,...R_8$ in abstrakter Form und eine Erklärung jeder Regel $R_1,...R_8$ angegeben, wobei lateinische Buchstaben in der Lernphase zu lernende Werte von Konstanten und griechische Buchstaben zu lernende Werte von Toleranzen darstellen:

- $R_{1;a,\alpha,\beta}(S_1, S_3)$ : $S_1$ = [a - $\alpha$, a + $\alpha$] min-1 $\Rightarrow$ $S_3$ > v - $\beta$ m/s; $\left(v = 2r\pi \frac{a\ \min^{-1}}{60}\right)$ Da die Maschine $M_1$ durch einen Keilriemen angetrieben wird, würde eine negative Evaluierung der Regel $R_1$ auf ein Problem bei der Kraftübertragung hinweisen. Die zu erwartende Geschwindigkeit, mit der sich der Keilriemen bewegt, lässt sich aus der Drehzahl des Antriebs der Maschine $M_1$ errechnen.

- $R_{2;a}(A_2, S_3)$ : $l$ = $A_2(l)$ cm $\Rightarrow$ $S_3$ < $a$ m/s Diese Regel beschreibt den Zusammenhang zwischen Kartonlänge und Geschwindigkeit des Förderbandes. Die Funktion $A_2(l)$ liefert den Wert für die Kartonlänge, der in den externen Vorgaben für den auf der Maschine $M_1$ durchgeführten Auftrag angeführt wird.

- $R_{3;a,b,c}(i, S_2)$ : $a \leq \sum_{j=i-c}^{c} S_2(T_j) \leq b$ Je nach Größe und Maschinengeschwindigkeit der Maschine $M_1$, muss der Einzug 11 eine bestimmte Zeit lang geöffnet sein, damit ein Karton eingezogen werden kann. Je nach benötigter Verarbeitungszeit pro Karton, muss der Einzug 11 eine bestimmte Zeit geschlossen bleiben, um einen Kartonstau zu verhindern. Aus diesen Faktoren ergeben sich die Grenzwerte a, b, wie oft der Sensor $S_2$ den Wert 1, der dem Zustand "geöffnet" entspricht, im Zeitfenster c liefert.

- $R_{4;a,\alpha}(A_3, S_5)$ : $A_3$ $\Rightarrow$ $S_5 \in$ [a - $\alpha$; a + $\alpha$] °C Diese Regel kontrolliert, ob die Fixierwalze für den Druck die richtige Temperatur hat.

- $R_{5;a,\alpha}(A_1, S_7)$: $A_1$ $\Rightarrow$ $S_7 \in$ [a - $\alpha$; a + $\alpha$] bar Diese Regel kontrolliert, ob mit der passenden Kraft gestanzt wird, damit Rillungen nicht zu tief gestanzt werden, bzw. andere Teile auch wirklich komplett durchgestanzt werden.

- $R_{6;a}(S_3, S_4, S_6, S_8)$ : $a$ m/s < $S_3 \leq S_4 \leq S_6 \leq S_8$ Diese Regel stellt sicher, dass es zu keinem Kartonstau durch abnehmende Geschwindigkeiten der die einzelnen Maschinenabschnitte verbindenden Förderbänder kommen kann.

- $R_{7;a,b,c\alpha}(i, S_1)$ : $i > a \Rightarrow \frac{1}{b+1} \sum_{j=i-b}^{i} S_1(T_j) \in [c - \alpha, c + \alpha]$ Diese Regel kontrolliert, ob der Mittelwert der Umdrehungen pro Minute des Förderbandantriebs, gemessen mit Sensor $S_1$ über die letzten b+1 Messungen im korrekten Intervall liegt. Diese Auswertung basiert auf einer statistischen Regel, die einen geschätzten Mittelwert nutzt.

- $R_{8;a,b}(A_4, S_7)$ : $A_4 > a\% \Rightarrow S_7 > b$ bar Diese Regel stellt einen Zusammenhang zwischen den Umgebungsparametern der Arbeitsumgebung, in der die Maschine $M_1$ betrieben wird, und dem Sensor $S_7$ der Maschine $M_1$ her. Wenn z. B. die Luftfeuchtigkeit in der Produktionshalle, in der die Maschine $M_1$ betrieben wird, einen gewissen Wert überschreitet, muss mehr Druck für die Stanzung aufgewendet werden.

Fig. 2 zeigt schematisch eine Maschine M', wobei die Regeln der Maschine $M_1$, die im Folgenden als Standardmaschine bezeichnet wird, auf die Maschine M' übertragen werden sollen. Die Maschine M' besitzt eine Einzugs-Einheit 21, die im wesentlichen baugleich zur Einzugseinheit 11 der Standardmaschine $M_1$ ist und an der sich drei Sensoren S'$_1$, S'$_2$, S'$_3$ befinden, wobei die Einzugs-Einheit 21 über einen ersten Förderband-Abschnitt 22 mit einer mit der Stanzungs-Einheit 15 der Standardmaschine $M_1$ im wesentlichen baugleichen Stanzungs-Einheit 25 verbunden ist und sich auf dem ersten Förderband-Abschnitt 21 ein Sensor S'$_4$ und auf der Stanzungs-Einheit 25 ein Sensor S'$_7$ befinden. Die Stanzungs-Einheit 25 ist über einen zweiten Förderband-Abschnitt 26 mit einer mit der Auswurf-Einheit 17 der Standardmaschine $M_1$ im wesentlichen baugleichen Auswurf-Einheit 27 verbunden, wobei sich auf dem zweiten Förderband-Abschnitt 26 ein Sensor S'$_8$ befindet. Die Sensoren S'$_1$, S'$_2$, S'$_3$, S'$_4$, S'$_7$, S'$_8$ ermitteln wiederholt zu vorgegebenen Zeitpunkten physikalische Messwerte.

Die Maschine M' verfügt somit über eine Anzahl von Sensoren S'$_1$, S'$_2$, S'$_3$, S'$_4$, S'$_7$, S'$_8$, deren Position und Sensitivität mit den auf der Standardmaschine $M_1$ befindlichen Sensoren zumindest teilweise übereinstimmt. Im Vergleich zur Maschine $M_1$, d.h. der Standardmaschine, weist die Maschine M' bauliche Unterschiede auf, da der zwischen Einzugs-Einheit 11 und Druck-Einheit 13 verlaufende Förderband-Abschnitt 12 und der darauf befindliche Sensor $S_5$ sowie die Druck-Einheit 13 und der auf der Druck-Einheit 13 befindliche Sensor $S_6$ fehlen, die bei der Maschine $M_1$ vorhanden sind. Die externen Vorgaben zur Durchführung eines Auftrags auf der Maschine M' und die Umgebungsparameter, denen die Maschine M' während eines Produktionsprozesses ausgesetzt ist, sind durch drei Attribute A'$_1$, A'$_2$, A'$_4$ gekennzeichnet. Somit besitzt die Maschine M' folgende Attribute $\mathbb{X}_{M'} = \{S'_1, S'_2, S'_3, S'_4, S'_7, S'_8, A'_1, A'_2, A'_4\}$.

Zur Übertragung von für die Standardmaschine $M_1$ aufgestellten Regeln auf die Maschine M' sieht ein erfindungsgemäßes Verfahren als nächsten Schritt vor, dass diejenigen Sensoren der Maschine M' ermittelt werden, die hinsichtlich Anordnung und Sensitivität einem Sensor der Standardmaschine $M_1$ paarweise zuordenbar sind, wobei es sich im konkreten Beispiel um die Sensoren $S_1$, $S_2$, $S_3$, $S_4$, $S_7$, $S_8$ bzw S'$_1$, S'$_2$, S'$_3$, S'$_4$, S'$_7$, S'$_8$ handelt. Weiters ist vorgesehen, dass diejenigen externen Vorgaben und Umgebungsparameter der Maschine M' ermittelt werden, die mit den externen Standardvorgaben und Standardumgebungsparameter der Standardmaschine $M_1$ übereinstimmen. Im konkreten Beispiel handelt es sich dabei um die Attribute A'$_1$, A'$_2$, A'$_4$. Es ist weiters vorgesehen, dass auch diejenigen Sensoren der Standardmaschine M ermittelt werden, denen hinsichtlich Anordnung und Sensitivität kein Sensor der Maschine M' zuordenbar ist, wobei es sich im gezeigten Beispiel um die Sensoren $S_5$ und $S_6$ handelt. Außerdem werden diejenigen externen Standardvorgaben und Standardumgebungsparameter der Standardmaschine $M_1$ ermittelt, die nicht mit den externen Vorgaben und Umgebungsparameter der Maschine M' übereinstimmen, wobei es sich im Beispiel um das Attribut $A_3$ handelt.

Erfindungsgemäß wird die Funktion $R_M : \mathbb{X} \rightarrow \mathbf{R}$, die vom Raum aller Attribute X auf den Raum aller Regeln R abbildet, genutzt, um diejenigen Regeln zu identifizieren, die auf der Standardmaschine $M_1$ genutzt werden und auch auf der Maschine M' genutzt werden können, da die Regeln dieselben Attribute betreffen. Es ergeben sich im Beispiel daher folgende Regeln, die von der Standardmaschine $M_1$ auf die Maschine M' übertragen werden:

$$R_{M_1}(X_{M'}) = R_{M'} = \{R'_1, R'_2, R'_3, R'_5, R'_7, R'_8\}.$$

Im Falle, dass bei einer Maschine M' Sensoren fehlen, die bei der Standardmaschine $M_1$ vorhanden sind, sieht ein erfindungsgemäßes Verfahren vorteilhafterweise vor, dass die Regeln, die für diese Sensoren bei der Standardmaschine $M_1$ gelten, gestrichen werden. Ebenso werden auch Regeln gestrichen, die bei der Standardmaschine $M_1$ für externe Standardvorgaben oder Standardumgebungsparameter gelten, die bei der Maschine M' nicht als externe Vorgaben oder Umgebungsparameter auftreten.

Als weiterer Schritt bei der erfindungsgemäßen Übertragung von Regeln wird untersucht, ob die auf die Maschine M' übermittelten Regeln durch die Messwerte derjenigen Sensoren der Maschine M', die mit den Sensoren der

Standardmaschine $M_1$ hinsichtlich Anordnung und Sensitivität übereinstimmen, erfüllt sind. Wenn dies der Fall ist, werden die Regeln zur Charakterisierung des normalen Betriebszustands des Arbeitsprozesses auf die Maschine M' übernommen. Sofern dies nicht der Fall ist, werden die Regeln an die neuen Messwerte der Maschine M' angepasst, indem die in den abstrakten Regeln vorhandenen Konstanten und Toleranzen für die Maschine M' in einer Lernphase neu gelernt werden, oder die Regeln werden verworfen. Weiters wird untersucht, ob die auf die Maschine M' übermittelten Regeln durch die externen Vorgaben und Umgebungsparameter der Maschine M', die mit den externen Standardvorgaben und Standardumgebungsparameter der Standardmaschine $M_1$ übereinstimmen, erfüllt sind. Wenn dies der Fall ist, werden die Regeln auf die Maschine M' übernommen. Sofern dies nicht der Fall ist, werden die Regeln an die neuen externen Vorgaben und Umgebungsparameter der Maschine M', wie voranstehend beschrieben, angepasst, d.h. indem die in den abstrakten Regeln vorhandenen Konstanten und Toleranzen für die Maschine M' in einer Lernphase neu gelernt werden, oder aber die Regeln letztendlich doch verworfen werden.

Eine weitere Variante eines erfindungsgemäßen Verfahrens sieht vor, dass bei der Übertragung von Regeln überprüft wird, ob einander zugeordnete Sensoren auf der Maschine M' und der Standardmaschine $M_1$ dieselbe Kennlinie hinsichtlich der zu ermittelnden physikalischen Größe aufweisen. Im Fall, dass eine Maschine M', auf die Regeln einer Standardmaschine $M_1$ übertragen werden sollen, Sensoren umfasst, die dieselben physikalischen Parameter wie Sensoren der Standardmaschine $M_1$ ermitteln, aber eine unterschiedliche Kennlinie besitzen, werden diejenigen Regeln, die für diese Sensoren auf der Standardmaschine $M_1$ gelten, an die neue Kennlinie der Maschine M' angepasst.

Alternativ kann eine Maschine M', auf die Regeln einer Standardmaschine $M_1$ übertragen werden sollen, auch derart gebaut werden, dass im Vergleich zur Standardmaschine $M_1$ keine Bauteile und/oder Sensoren entfallen, sondern dass Bauteile und/oder Sensoren hinzugefügt werden und/oder Bauteile modifiziert werden und/oder Sensoren der Standardmaschine $M_1$ neu positioniert oder hinsichtlich ihrer Sensitivität oder Kalibrierung geändert werden. Bei einem erfindungsgemäßen Verfahren kann daher auch vorgesehen sein, dass untersucht wird, ob die Maschine M', auf die Regeln der Standardmaschine $M_1$ übertragen werden, Sensoren aufweist, denen hinsichtlich Anordnung und Sensitivität kein Sensor der Standardmaschine $M_1$ zuordenbar ist. In diesem Fall sieht ein erfindungsgemäßes Verfahren vor, dass für die Messwerte der so ermittelten Sensoren der Maschine M' neue Regeln aufgestellt werden, die den normalen Betriebszustand der Maschine M' charakterisieren. Diese neuen Regeln für die Maschine M' werden auf voranstehend beschriebene Weise erstellt, die auch für die Erstellung von Regeln für die Messwerte des Standardprozesses der Standardmaschine $M_1$ verwendet werden, wobei diese Regeln insbesondere auch Messwerte von Sensoren berücksichtigen können, die sowohl auf der Maschine M', als auch auf der Standardmaschine $M_1$ vorhanden sind. Weiters wird untersucht, ob die externen Vorgaben und Umgebungsparameter der Maschine M' mit den externen Standardvorgaben und Standardumgebungsparameter der Standardmaschine $M_1$ übereinstimmen. In diesem Fall kann vorgesehen sein, dass die Regeln der Standardmaschine $M_1$, die diese externen Standardvorgaben und Standardumgebungsparameter betreffen, auf die Maschine M' übermitteltet werden und dass überprüft wird, ob die übermittelten Regeln durch die externen Vorgaben und Umgebungsparameter der Maschine M' erfüllt sind. Wenn dies der Fall ist, werden die Regeln auf die Maschine M' übernommen. Sofern dies nicht der Fall ist, werden die Regeln an die neuen externen Vorgaben und Umgebungsparameter der Maschine M', wie voranstehend beschrieben, angepasst.

Eine weitere Variante eines erfindungsgemäßen Verfahrens sieht vor, dass Regeln von zumindest zwei Standardmaschinen $M_1$, $M_2$, die Sensoren umfassen und mit den jeweils gültigen externen Standardvorgaben und mit den jeweils herrschenden Standardumgebungsparametern betrieben werden, auf eine weitere Maschine M' übertragen werden. In diesem Fall werden zunächst für beide Standardmaschinen $M_1$, $M_2$ wie voranstehend beschrieben Regeln für das jeweils gültige Set an Attributen gesucht, die den Zusammenhang der von den Sensoren der Standardmaschinen $M_1$, $M_2$ ermittelten Messwerte während des normalen Betriebszustands der Standardmaschinen $M_1$, $M_2$ in der betreffenden Standardarbeitsumgebung mit den externen Standardvorgaben beschreiben, und die während des normalen Betriebszustands der Standardmaschinen $M_1$, $M_2$ erfüllt sind. Zur Übertragung der für die Standardmaschinen $M_1$, $M_2$ aufgestellten Regeln auf die Maschine M' ist als nächster Schritt vorgesehen, dass die für die Standardmaschinen $M_1$, $M_2$ gültigen Regeln in abstrakter Form dargestellt werden. Anschließend wird überprüft, ob Sensoren der Maschine M' mit Sensoren der Standardmaschinen $M_1$, $M_2$ hinsichtlich Sensitivität und Anordnung übereinstimmen und ob externe Vorgaben oder Umgebungsparameter der Maschine M' mit den jeweiligen externen Standardvorgaben oder Standardumgebungsparametern der Standardmaschinen $M_1$, $M_2$ übereinstimmen.

Im Fall der Übeinstimmung von Sensoren und/oder externen Vorgaben und/oder Umgebungsparametern der Maschine M' mit zumindest einer der Standardmaschinen $M_1$ und $M_2$, werden diejenigen, dieselben Attribute betreffenden, und auf zumindest einer der Standardmaschinen $M_1$, $M_2$ oder auf beiden Standardmaschinen $M_1$, $M_2$ gültigen Regeln auf die Maschine M' übertragen.

Als weiterer Schritt wird untersucht, ob die von einer der Standardmaschinen $M_1$, $M_2$ oder beiden Standardmaschinen $M_1$, $M_2$ auf die Maschine M' übermittelten Regeln durch die Messwerte derjenigen Sensoren der Maschine M', die mit den Sensoren zumindest einer der Standardmaschinen $M_1$, $M_2$ hinsichtlich Anordnung und Sensitivität übereinstimmen, erfüllt sind. Weiters wird untersucht, ob die auf die Maschine M' übermittelten Regeln durch die externen Vorgaben und Umgebungsparameter der Maschine M', die mit den externen Standardvorgaben und Standardumgebungsparameter zumindest einer der Standardmaschinen $M_1$, $M_2$ übereinstimmen, erfüllt sind. Wenn dies der Fall ist, werden die Regeln auf die Maschine M' übernommen. Weiters kann vorteilhafterweise bei einem erfindungsgemäßen Verfahren vorgesehen sein, dass die abstrakten Regelformen der auf die Maschine M' übermittelten Regeln verglichen werden. Im Falle, dass zwei oder mehr Regeln dieselbe abstrakte Form haben und diese Regeln für die Maschine M' gültig sind, werden die jeweils geeigneteren Werte für Variablen und Toleranzen gewählt. Vorteilhafterweise werden bei der Übernahme von Regeln jeweils die geringeren Toleranzen und engeren Intervalle gewählt.

Sofern die auf die Maschine M' übermittelten Regeln durch die externen Vorgaben und Umgebungsparameter der Maschine M', die mit den externen Standardvorgaben und Standardumgebungsparameter zumindest einer der Standardmaschinen $M_1$, $M_2$ übereinstimmen, nicht erfüllt sind, werden die in den abstrakten Regeln vorhandenen Konstanten und Toleranzen für die Maschine M' in einer Lernphase neu gelernt und die Regeln werden an die neuen externen Vorgaben und Umgebungsparameter der Maschine M' angepasst, oder die Regeln werden verworfen.

Im Falle, dass bei einer Maschine M' Sensoren fehlen, die bei zumindest einer der Standardmaschinen $M_1$, $M_2$ vorhanden sind, ist vorgesehen, dass die Regeln, die für diese Sensoren bei zumindest einer der Standardmaschinen $M_1$, $M_2$ gelten, gestrichen werden. Ebenso werden auch Regeln gestrichen, die bei zumindest einer der Standardmaschinen $M_1$, $M_2$ für externe Standardvorgaben oder Standardumgebungsparameter gelten, die bei der Maschine M' nicht als externe Vorgaben oder Umgebungsparameter auftreten.

Im Fall, dass die Maschine M' Sensoren aufweist, denen hinsichtlich Anordnung und Sensitivität kein Sensor zumindest einer der Standardmaschinen $M_1$, $M_2$ zuordenbar ist, werden wie voranstehend beschrieben neue Regeln aufgestellt, die den normalen Betriebszustand der Maschine M' charakterisieren.

Alternativ können auch in einer zentralen Schaltstelle Sets von Regeln gespeichert sein, wobei die Regeln die Zusammenhänge der ermittelten Messwerte während der normalen Betriebszustände einer Vielzahl von Standardmaschinen $M_1$,.., $M_n$ in den betreffenden Arbeitsumgebungen mit den externen Vorgaben beschreiben, die während der normalen Betriebszustände erfüllt sind. Erfindungsgemäß ist vorgesehen, dass für einen Arbeitsprozess mit externen Vorgaben in einer Arbeitsumgebung einer den Standardmaschinen $M_1$,..., $M_n$ ähnlichen oder identischen Maschine M' geeignete Sets von Regeln ausgewählt werden. Zur Auswahl geeigneter Regeln wird überprüft, ob Umgebungsparameter der Arbeitsumgebung und/oder externe Vorgaben und/oder Sensoren der Maschine M' mit Standardumgebungsparametern der Arbeitsumgebung und/oder externen Standardvorgaben und/oder mit Sensoren hinsichtlich Anordnung und Sensitivität zumindest einer der Standardmaschinen $M_1$,..., $M_n$ übereinstimmen. Die ausgewählten Regeln werden auf den Arbeitsprozess der Maschine M' in der Arbeitsumgebung übertragen.

Bei einer weiteren Variante eines erfindungsgemäßen Verfahrens ist vorgesehen, dass für beispielsweise eine Maschine $M_1$, wie sie in **Fig. 1** gezeigt ist, die in einer Arbeitsumgebung betrieben wird und Sensoren $S_1$....$S_8$ umfasst, wobei die Sensoren während des auf der Maschine $M_1$ durchgeführten Arbeitsprozesses zu vorgegebenen wiederkehrenden Zeitpunkten Messwerte ermitteln, wie voranstehend beschrieben Regeln $R_1$,...$R_8$ für den normalen Betriebszustand der Maschine $M_1$ ermittelten werden und diese Regeln $R_1$,...$R_8$ auf die Messwerte der Sensoren der Maschine $M_1$ angewendet werden. Da die Regeln $R_1$,...$R_8$ während des normalen Betriebszustands der Maschine $M_1$ in der betreffenden Arbeitsumgebung mit den externen Vorgaben erfüllt sind, kann ein anomaler Zustand der Maschine $M_1$ und/oder des Arbeitsprozesses identifiziert werden, falls Messwerte vorhanden sind, die den Regeln $R_1$,...$R_8$ für den normalen Betriebszustand nicht genügen.

Tabelle 3 zeigt ein Beispiel für die Auswertung der voranstehend beschriebenen Regeln $R_1$,...$R_8$ für die in **Fig. 1** gezeigte Maschine $M_1$, wobei die Regeln $R_1$,...$R_8$ für die Messwerte der Sensoren $S_1$,...$S_8$ und die externen Vorgaben und Umgebungsparameter $A_1$, $A_2$, $A_3$, $A_4$ gelten und über einen Zeitraum $T_1$ bis $T_{140}$ betrachtet werden.

Tabelle 3: Beispiel-Auswertung der Regeln für Maschine $M_1$.

| $t$ | $S_1$ | $S_2$ | $S_3$ | $S_4$ | $S_5$ | $S_6$ | $S_7$ | $S_8$ | $A_1$ | $A_2$ | $A_3$ | $A_4$ |
|---|---|---|---|---|---|---|---|---|---|---|---|---|
| $T_1$ | 25 | 1 | 0.26 | 0.2601 | 180 | 0.2601 | 9.9 | 0.2602 | 3 | 50 | 1 | 36 |
| $T_2$ | 25 | 1 | 0.259 | 0.26 | 180.2 | 0.26 | 9.95 | 0.2601 | 3 | 50 | 1 | 37 |
| ⋮ | ⋮ | ⋮ | ⋮ | ⋮ | ⋮ | ⋮ | ⋮ | ⋮ | ⋮ | ⋮ | ⋮ | ⋮ |
| $T_{140}$ | 25 | 0 | 0.26 | 0.2603 | **171** | 0.2604 | **9.9** | 0.2604 | 3 | 50 | 1 | **41** |

Im in Tabelle 3 angegebenen Beispiel ist die Temperatur der Fixierwalze der Druck-Einheit 13 von Maschine $M_1$ soweit abgesunken, dass der Druck nicht mehr vollwertig auf dem Karton sichtbar ist. Im gezeigten Beispiel wird die Information über eine sich verschlechternde Druckqualität mit einem erfindungsgemäßen Verfahren durch ein Fehlschlagen der Regel $R_4$ gewonnen. Außerdem ist die Luftfeuchtigkeit zum Zeitpunkt $T_{140}$ auf über 40% gestiegen, was zu einem Fehlschlagen der Regel $R_8$ führt und die Stanzform übt nur einen Druck von 9.9 bar aus, wodurch Regel $R_5$ verletzt wird. Da die Messwerte der Sensoren der Maschine $M_1$ im gezeigten Beispiel den Regeln $R_4$, $R_5$ und $R_8$ nicht

genügen, wird von einem erfindungsgemäßen Verfahren ein anomaler Zustand der Maschine $M_1$ oder des auf der Maschine $M_1$ durchgeführten Produktionsprozesses angezeigt.

Mit einem derartigen Verfahren kann einfach die zeitintensive Fehlersuche bei einem auf der Maschine $M_1$ durchgeführten Produktionsprozess verkürzt und die Dauer von Stehzeiten verringert werden, wodurch der Produktionsprozess optimiert und dessen Effizienz gesteigert werden können. Durch das automatische Ermitteln der Regeln mit den voranstehend beschriebenen Methoden entfallen vorteilhafterweise auch ein aufwändiges händisches Ermitteln und Konfigurieren der Regeln.

**Patentansprüche**

1.   Verfahren zur Ermittlung und Übertragung bzw. Anpassung von Regeln zur Charakterisierung eines normalen Betriebszustands eines Arbeitsprozesses in Form eines Produktionsprozesses oder Fertigungsprozesses, wobei

- ein Standardprozess mit einer als Standardmaschine ($M_1$) genutzten Maschine in der Standardumgebung mit externen Standardvorgaben gestartet wird,

- wobei der auf der Standardmaschine ($M_1$) durchgeführte Prozess als Standardprozess und eine Arbeitsumgebung, in der sich die Standardmaschine ($M_1$) befindet, als Standardumgebung und die externen Vorgaben für die Standardmaschine ($M_1$) als externe Standardvorgaben bezeichnet werden, und wobei die externen Vorgaben Vorgaben für die Durchführung eines Auftrags auf der Standardmaschine ($M_1$) sind,

- wobei die Standardmaschine ($M_1$) eine Anzahl von Attributen in Form von Messwerten und externen Vorgaben, und optional Randbedingungen, Umgebungsparametern und/oder zeitunabhängigen Attributen, besitzt,
- wobei die Standardmaschine ($M_1$) über eine Anzahl von Sensoren ($S_1$,..., $S_8$) verfügt,
- wobei mit den Sensoren ($S_1$,..., $S_8$) der Standardmaschine ($M_1$) wiederholt zu vorgegebenen Zeitpunkten Messwerte ermittelt werden, und
- in einer Lernphase automatisiert auf der Standardmaschine ($M_1$) nach Regeln gesucht wird,

- wobei die Attribute als Eingangsparameter für die Regeln verwendet werden,
- wobei die Regeln den Zusammenhang zwischen den von den Sensoren ($S_1$...$S_8$) der Standardmaschine ($M_1$) ermittelten Messwerten untereinander und/oder den Zusammenhang zwischen den ermittelten Messwerten und den Umgebungsparametern beschreiben und
- wobei die Regeln während des normalen Betriebszustands der Standardmaschine ($M_1$) in der betreffenden Standardumgebung mit den externen Standardvorgaben erfüllt sind,
**dadurch gekennzeichnet,**

- **dass** in einer zentralen Schaltstelle die in der Lernphase ermittelten Regeln der Standardmaschine ($M_1$) in Form eines Regelsets gespeichert werden, und
- **dass** ein Arbeitsprozess auf einer der Standardmaschine ($M_1$) ähnlichen oder identischen Maschine (M') in einer Arbeitsumgebung mit externen Vorgaben durchgeführt wird,

- wobei die externen Vorgaben und Umgebungsparameter zur Durchführung eines Auftrags auf der Maschine (M') durch Attribute festgelegt sind, und
- wobei die Maschine (M') Sensoren ($S'_1$,..., $S'_8$) zur Messung physikalischer Parameter an vorgegebenen Positionen im Bereich der Maschine (M') aufweist,

- wobei die Maschine (M') der Standardmaschine ($M_1$) ähnlich ist, wenn zumindest einer der folgenden Punkte zutrifft:

a) **dass** die Maschine (M') im Vergleich zur Standardmaschine ($M_1$) hinzugefügte Bauteile und/oder Sensoren ($S_1$,..., $S_8$) aufweist,
b) **dass** bei der Maschine (M') im Vergleich zur Standardmaschine ($M_1$) Bauteile und/oder Sensoren ($S_1$,..., $S_8$) fehlen,
c) **dass** die Maschine (M') im Vergleich zur Standardmaschine ($M_1$) modifizierte Bauteile aufweist.
d) **dass** bei der Maschine (M') im Vergleich zur Standardmaschine ($M_1$) Sensoren ($S_1$,..., $S_8$) neu positioniert oder hinsichtlich ihrer Sensitivität oder Kalibrierung geändert sind,

- wobei die Maschine (M') über eine Anzahl von Sensoren ($S'_1$,..., $S'_8$) der Maschine (M') verfügt, deren Position und Sensitivität mit den auf der Standardmaschine ($M_1$) befindlichen Sensoren ($S_1$,... $S_8$) zumindest teilweise übereinstimmt und mit den Sensoren ($S'_1$,..., $S'_8$) der Maschine (M') wiederholt zu vorgegebenen Zeitpunkten Messwerte ermittelt werden,

- wobei für den Arbeitsprozess mit externen Vorgaben in der Arbeitsumgebung der der Standardmaschine ($M_1$) ähnlichen oder identischen Maschine (M') ein geeignetes in der zentralen Schaltstelle gespeichertes Regelset ausgewählt wird, wobei das Regelset nach Übereinstimmung der Sensoren und/oder der Umgebungsparameter der Arbeitsumgebung und/oder der externen Vorgaben der Maschine (M') ausgewählt wird, indem

- auf der Maschine (M') diejenigen Sensoren ($S'_1$,..., $S'_8$) der Maschine (M') ermittelt werden, die hinsichtlich Anordnung und Sensitivität einem Sensor ($S_1$,..., $S_8$) der Standardmaschine ($M_1$) paarweise zuordenbar sind, und diejenigen externen Vorgaben und Umgebungsparameter der Maschine (M') ermittelt werden, die mit den externen Standardvorgaben und Umgebungsparametern der Standardmaschine ($M_1$) übereinstimmen, um diejenigen Regeln zu identifizieren, die auf der Standardmaschine ($M_1$) genutzt werden und auch auf der Maschine (M') genutzt werden können, da die Regeln dieselben Attribute wie auf der Standardmaschine ($M_1$) betreffen,

- wobei die in der zentralen Schaltstelle gespeicherten für den Standardprozess in der Lernphase ermittelten Regeln der Standardmaschine ($M_1$) automatisiert auf den Arbeitsprozess der Maschine (M') in der Arbeitsumgebung übertragen werden und

- wobei auf der Maschine (M') untersucht wird, ob die übermittelten Regeln durch die Messwerte derjenigen Sensoren ($S'_1$,..., $S'_8$) der Maschine (M'), die mit den Sensoren ($S_1$,..., $S_8$) der Standardmaschine ($M_1$) hinsichtlich Anordnung und Sensitivität übereinstimmen, erfüllt sind, und ob die übermittelten Regeln durch die externen Vorgaben der Maschine (M'), die mit den externen Standardvorgaben der Standardmaschine ($M_1$) übereinstimmen, erfüllt sind, und

- wenn dies der Fall ist, die Regeln zur Charakterisierung des normalen Betriebszustands des Arbeitsprozesses übernommen werden, und

- sofern dies nicht der Fall ist, die Regeln in einer Lernphase an die neuen Messwerte der Maschine (M') und/oder an die neuen externen Vorgaben der Maschine (M') angepasst oder verworfen werden.

2. Verfahren nach Anspruch 1, **dadurch gekennzeichnet,**

- **dass** untersucht wird, ob bei der Standardmaschine ($M_1$) Sensoren ($S_1$,..., $S_8$) vorhanden sind, denen hinsichtlich Anordnung und Sensitivität kein Sensor ($S'_1$,..., $S'_8$) der Maschine (M') zuordenbar ist,

- wobei im Falle des Fehlens von zuordenbaren Sensoren ($S'_1$,..., $S'_8$) bei der Maschine (M') die Regeln, die für diese Sensoren bei der Standardmaschine ($M_1$) gelten, gestrichen werden.

3. Verfahren nach Anspruch 1 oder 2 **dadurch gekennzeichnet, dass** untersucht wird, ob einander zugeordnete Sensoren ($S'_1$,..., $S'_8$) der Maschine (M') dieselbe Kennlinie hinsichtlich der zu ermittelnden physikalischen Größe aufweisen,

- wobei im Fall einander zugeordneter Sensoren ($S'_1$,..., $S'_8$) der Maschine (M') mit einer unterschiedlichen Kennlinie diejenigen Regeln, die für diese Sensoren ($S_1$,..., $S_8$) bei der Standardmaschine ($M_1$) gültig sind, an die neue Kennlinie der Maschine (M') angepasst werden.

4. Verfahren nach einem der vorangehenden Ansprüche, **dadurch gekennzeichnet,**

- **dass** untersucht wird, ob bei der Maschine (M') Sensoren ($S'_1$,..., $S'_8$) vorhanden sind, denen hinsichtlich Anordnung und Sensitivität kein Sensor ($S_1$,..., $S_8$) der Standardmaschine ($M_1$) zuordenbar ist,

- **dass** für die Messwerte der so ermittelten Sensoren ($S'_1$,..., $S'_8$) der Maschine (M') neue Regeln aufgestellt werden, die den normalen Betriebszustand charakterisieren,

- wobei insbesondere diese Regeln auf dieselbe Weise erstellt werden, die auch für die Erstellung von der Regeln für die Messwerte des Standardprozesses verwendet werden,

- wobei diese Regeln insbesondere auch Messwerte von Sensoren ($S'_1$,..., $S'_8$) berücksichtigen können, die sowohl auf der Maschine (M'), als auch auf der Standardmaschine ($M_1$) vorhanden sind.

5. Verfahren nach einem der vorangehenden Ansprüche, **dadurch gekennzeichnet, dass** der Arbeitsprozess festgelegt wird, in dem die Maschine (M') oder die Standardmaschine (M$_1$) in einer von der Standardumgebung abweichenden Arbeitsumgebung betrieben wird, wobei sich die Arbeitsumgebung von der Standardumgebung insbesondere hinsichtlich der folgenden Umgebungsparameter unterscheidet:

a) Umgebungstemperatur, und/oder
b) Umgebungsluftfeuchtigkeit, und/oder
c) Umgebungsluftdruck.

6. Verfahren nach einem der vorangehenden Ansprüche, **dadurch gekennzeichnet, dass** sofern die übermittelten Regeln durch die externen Vorgaben der Maschine (M'), die mit den externen Standardvorgaben der Standardmaschine (M$_1$) übereinstimmen, nicht erfüllt sind, für diese neuen externen Vorgaben neue Regeln festgelegt werden.

7. Verfahren nach einem der vorangehenden Ansprüche, **dadurch gekennzeichnet,**

- **dass** die Maschine (M') in der Arbeitsumgebung betrieben wird,
- **dass** während des Arbeitsprozesses zu vorgegebenen wiederkehrenden Zeitpunkten Messwerte ermittelt werden,
- **dass** die für den Arbeitsprozess ermittelten Regeln auf die Messwerte angewendet werden, und
- falls Messwerte vorhanden sind, die den Regeln für den normalen Betriebszustand nicht genügen, ein anomaler Zustand der Maschine (M') und/oder des Arbeitsprozesses identifiziert wird.

8. Verfahren nach einem der vorangehenden Ansprüche, **dadurch gekennzeichnet, dass** auf zumindest zwei Standardmaschinen (M$_1$, M$_2$) Regeln ermittelt werden, die den Zusammenhang der ermittelten Messwerte während des normalen Betriebszustands der Standardmaschinen (M$_1$) in den betreffenden Arbeitsumgebungen mit den externen Vorgaben beschreiben, und die während der normalen Betriebszustände erfüllt sind, und

- wobei die für zumindest zwei Standardmaschinen (M$_1$) ermittelten Regeln auf den Arbeitsprozess einer den Standardmaschinen (M$_1$) ähnlichen oder identischen Maschine (M') in der Arbeitsumgebung übertragen werden.

9. Verfahren nach einem der vorangehenden Ansprüche, **dadurch gekennzeichnet, dass** in der zentralen Schaltstelle Regelsets, gespeichert werden,
die die Zusammenhänge der ermittelten Messwerte während der normalen Betriebszustände einer Vielzahl von Standardmaschinen (M$_1$) in den betreffenden Arbeitsumgebungen mit den externen Vorgaben beschreiben, und die während der normalen Betriebszustände erfüllt sind,

- wobei für den Arbeitsprozess einer den Standardmaschinen (M) ähnlichen oder identischen Maschine (M') geeignete Regelsets ausgewählt werden, und
- wobei die ausgewählten Regelsets auf den Arbeitsprozess der Maschine (M') in der Arbeitsumgebung übertragen werden.

10. Datenträger, auf dem ein Programm zur Durchführung eines Verfahrens nach einem der vorangehenden Ansprüche abgespeichert ist.

**Claims**

1. Method for determining and transmitting or adapting rules for characterising a normal operating state of a work process in the form of a production process or manufacturing process, whereby

- a standard process with a machine used as a standard machine (M$_1$) is started in the standard environment with external standard specifications,

- whereby the process carried out on the standard machine (M1) is designated as a standard process and a work environment in which the standard machine (M$_1$) is located is designated as a standard environment, and the external specifications for the standard machine (M$_1$) are designated as external standard specifications, and whereby the external specifications are specifications for carrying out an order on the standard machine (M$_1$),

- whereby the standard machine ($M_1$) has a number of attributes in the form of measurement values and external specifications, and optionally boundary conditions, environmental parameters and/or time-dependent attributes,
- whereby the standard machine ($M_1$) has a number of sensors ($S_1$,...,$S_8$),
- whereby measurement values are determined repeatedly at predefined times with the sensors ($S_1$,...,$S_8$) of the standard machine ($M_1$), and
- in a learning phase a search for rules is automatically performed on the standard machine ($M_1$),

- whereby the attributes are used as input parameters for the rules,
- whereby the rules describe the relationship between the measurement values determined by the sensors ($S_1$,...,$S_8$) of the standard machine ($M_1$) and/or the relationship between the determined measurement values and the environmental parameters and
- whereby the rules are complied with during the normal operating state of the standard machine ($M_1$) in the relevant standard environment with the external standard specifications,
**characterised in that**

- in a central switching point the rules of the standard machine ($M_1$) determined in the learning phase are stored in the form of a rule set, and
- a work process is carried out on a machine (M') which is similar or identical to the standard machine ($M_1$) in a work environment with external specifications,

- whereby the external specifications and environmental parameters for carrying out an order on the machine (M') are defined by attributes, and
- whereby the machine (M') has sensors ($S'_1$,...,$S'_8$) for measuring physical parameters at predefined positions in the region of the machine (M'),

- whereby the machine (M') is similar to the standard machine ($M_1$) if at least one of the following points applies:

a) that the machine (M') has added components and/or sensors ($S_1$,...,$S_8$) by comparison with the standard machine ($M_1$),
b) that the machine (M') lacks components and/or sensors ($S_1$,...,$S_8$) by comparison with the standard machine ($M_1$),
c) that the machine (M') has modified components and/or sensors ($S_1$,...,$S_8$) by comparison with the standard machine ($M_1$),
d) that in the machine (M') sensors ($S_1$,...,$S_8$) are repositioned or are changed with regard to their sensitivity or calibration by comparison with the standard machine ($M_1$),

- whereby the machine (M') has a number of sensors ($S'_1$,...,$S'_8$) of the machine (M') in which the position and sensitivity at least partially match those of the sensors ($S_1$,...,$S_8$) located on the standard machine ($M_1$), and measurement values are determined repeatedly at predefined times with the sensors ($S'_1$,...,$S'_8$) if the machine (M'),
- whereby a suitable rule set stored in the central switching point is selected for the work process with external specifications in the work environment of the machine (M') which is similar or identical to the standard machine ($M_1$),whereby the rule set is selected according to the conformity of the sensors and/or the environment parameters of the work environment and/or the external specifications the machine (M'), as
- on the machine (M') those sensors ($S'_1$,...,$S'_8$) of the machine (M') are determined which, with regard to arrangement and sensitivity, can be assigned in pairs to a sensor ($S_1$,...,$S_8$) of the standard machine ($M_1$) in pairs can be co-ordinated are, and those external specifications and environment parameters of the machine (M') are determined which match the external standard specifications and environment parameters of the standard machine ($M_1$), in order to identify those rules which are used on the standard machine ($M_1$) and can also be used on the machine (M'), since the rules relate to the same attributes as on the standard machine ($M_1$),
- whereby the rules of the standard machine ($M_1$) which are stored in the central switching point and are determined for the standard process in the learning phase are transmitted automatically to the work process of the machine (M') in the work environment, and
- whereby on the machine (M') it is investigated whether the transmitted rules are complied with by the measurement values of those sensors ($S'_1$,...,$S'_8$) of the machine (M') which match those of the sensors ($S_1$,...,$S_8$) of the standard machine ($M_1$) with regard to arrangement and sensitivity, and whether the transmitted rules are complied with by the external specifications of the machine (M') which match the external standard specifications of the standard machine ($M_1$), and

- if this is the case, the rules for characterising the normal operating state of the work process are adopted, and
- provided that this is not the case, in a learning phase the rules are adapted to the new measurement values of the machine (M') and/or to the new external specifications of the machine (M'), or are discarded.

2. Method according to claim 1, **characterised in that**

- it is investigated whether there are sensors ($S_1$,...,$S_8$) in the standard machine ($M_1$) to which no sensor ($S'_1$,...,$S'_8$) of the machine (M') can be assigned with regard to arrangement and sensitivity,
- whereby, in the event of an absence of assignable sensors ($S'_1$,...,$S'_8$) in the machine (M'), the rules applicable to these sensors in the standard machine ($M_1$) are deleted.

3. Method according to claim 1 or 2, **characterised in that** it is investigated whether sensors ($S'_1$,...,$S'_8$) of the machine (M') which are assigned to one another have the same characteristic with regard to the physical quantity to be determined,

- whereby in the case of sensors ($S'_1$,...,$S'_8$) of the machine (M') with a different characteristic which are assigned to one another, those rules which are valid for those sensors ($S_1$,...,$S_8$) in the standard machine ($M_1$) are adapted to the new characteristic of the machine (M').

4. Method according to any of the preceding claims, **characterised in that**

- it is investigated whether there are sensors ($S'_1$,...,$S'_8$) in the machine (M') to which no sensor ($S_1$,...,$S_8$) of the standard machine ($M_1$) can be assigned with regard to arrangement and sensitivity,
- that, for the measurement values of the sensors ($S'_1$,...,$S'_8$) of the machine (M') thus determined, new rules are established which characterise the normal operating state,
- whereby in particular these rules are established in the same way as that also used to establish the rules for the measurement values of the standard process,
- whereby in particular these rules can also take account of measurement values of sensors ($S'_1$,...,$S'_8$) which are present both on the machine (M') and also on the standard machine ($M_1$).

5. Method according to any of the preceding claims, **characterised in that** the work process, in which the machine (M') or the standard machine ($M_1$) is operated in a work environment different from the standard environment, is defined, whereby the work environment differs from the standard environment in particular with regard to the following environment parameters:

a) environment temperature, and/or
b) environment humidity, and/or
c) environment air pressure.

6. Method according to any of the preceding claims, **characterised in that** provided that the transmitted rules are not complied with by the external specifications of the machine (M') which match the external standard specifications the standard machine ($M_1$), new rules are defined for these new external specifications.

7. Method according to any of the preceding claims, **characterised in that**

- the machine (M') is operated in the work environment,
- during the work process measurement values are determined at predefined recurring times,
- the rules determined for the work process are applied to the measurement values, and
- if there are measurement values which do not satisfy the rules for the normal operating state, an abnormal state the machine (M') and/or of the work process is identified.

8. Method according to any of the preceding claims, **characterised in that** on at least two standard machines ($M_1$; $M_2$) rules are determined which describe the relationship of the determined measurement values during the normal operating state of the standard machine ($M_1$) in the relevant work environments with the external specifications, and which are complied with during the normal operating states, and

- whereby the rules determined for at least two standard machines ($M_1$) are transmitted to the work process of a machine (M') which is similar or identical to the standard machines ($M_1$) in the work environment.

9. Method according to any of the preceding claims, **characterised in that** in the central switching point rule sets are stored which describe the relationships of the determined measurement values during the normal operating states of a large number of standard machines ($M_1$) in the relevant work environments with the external specifications, and which are complied with during the normal operating states,

    - whereby rule sets are selected for the work process of a machine (M') which is similar or identical to the standard machines (M), and
    - whereby the selected rule sets are transmitted to the work process of the machine (M') in the work environment

10. Data storage medium on which a program for carrying out a method according to any of the preceding claims is stored.


**Revendications**

1. Procédé de détermination et de transfert ou d'adaptation de règles afin de caractériser un état de fonctionnement normal d'un procédé de travail sous la forme d'un procédé de production ou d'un procédé de fabrication, dans lequel

    - un procédé standard est démarré avec une machine utilisée comme machine standard ($M_1$) dans l'environnement standard avec des spécifications standard externes,
    - dans lequel le procédé mis en œuvre sur la machine standard ($M_1$) est appelé procédé standard et un environnement de travail dans lequel se trouve la machine standard ($M_1$) est appelé environnement standard et les spécifications externes pour la machine standard ($M_1$) sont appelées spécifications standard externes, et dans lequel les spécifications externes sont des spécifications destinées à la mise en œuvre d'une commande sur la machine standard ($M_1$),
    - dans lequel la machine standard ($M_1$) présente un certain nombre d'attributs, sous la forme de valeurs de mesure et de spécifications externes, et facultativement de conditions limites, de paramètres environnementaux et/ou d'attributs indépendants du temps,
    - dans lequel la machine standard ($M_1$) dispose d'un certain nombre de capteurs ($S_1$,..., $S_8$),
    - dans lequel des valeurs de mesure sont déterminées de manière répétée à des instants prédéterminés grâce aux capteurs ($S_1$,..., $S_8$) de la machine standard ($M_1$), et
    - les règles sont recherchées de manière automatisée sur la machine standard ($M_1$) lors d'une phase d'apprentissage,
    - dans lequel les attributs sont utilisés comme paramètres d'entrée pour les règles,
    - dans lequel les règles décrivent la relation entre les valeurs de mesure déterminées par les capteurs ($S_1$,..., $S_8$) de la machine standard ($M_1$) et/ou la relation entre les valeurs de mesure déterminées et les paramètres environnementaux, et
    - dans lequel les règles sont satisfaites dans l'environnement standard concerné pendant l'état de fonctionnement normal de la machine standard ($M_1$) avec les spécifications standard externes,
    **caractérisé en ce que**
    - les règles de la machine standard ($M_1$) déterminées lors de la phase d'apprentissage sont mémorisées sous la forme d'un ensemble de règles dans un aiguillage central, et
    - un procédé de travail est mis en œuvre sur une machine (M') similaire ou identique à la machine standard ($M_1$) dans un environnement de travail avec des spécifications externes,
    - dans lequel les spécifications externes et les paramètres environnementaux sont définis grâce à des attributs en vue de la mise en œuvre d'une commande sur la machine (M'), et
    - dans lequel la machine (M') présente des capteurs ($S'_1$,..., $S'_8$) permettant de mesurer des paramètres physiques au niveau de positions prédéterminées dans la région de la machine (M'),
    - dans lequel la machine (M') est similaire à la machine standard ($M_1$) si au moins l'une des conditions ci-dessous s'applique :

        a) la machine (M') présente des composants et/ou des capteurs ($S_1$,..., $S_8$) ajoutés en comparaison de la machine standard ($M_1$),
        b) des composants et/ou de capteurs ($S_1$,..., $S_8$) sont absents de la machine (M') en comparaison de la machine standard ($M_1$),
        c) la machine (M') présente des composants modifiés par rapport à la machine standard ($M_1$),
        d) des capteurs ($S_1$,..., $S_8$) sont repositionnés ou leur sensibilité ou leur étalonnage est modifié(e) dans la machine (M') en comparaison de la machine standard ($M_1$),

- dans lequel la machine (M') dispose d'un certain nombre de capteurs (S'$_1$,..., S'$_8$) de la machine (M'), dont la position et la sensibilité correspondent au moins partiellement aux capteurs (S$_1$,..., S$_8$) situés sur la machine standard (M$_1$) et des valeurs de mesure sont déterminées de manière répétée à des moments prédéterminés dans le temps grâce aux capteurs (S'$_1$,..., S'$_8$) de la machine (M'),

- dans lequel un ensemble de règles approprié mémorisé dans l'aiguillage central est sélectionné pour le procédé de travail avec des spécifications externes dans l'environnement de travail de la machine (M') similaire ou identique à la machine standard (M$_1$), dans lequel l'ensemble de règles est sélectionné en fonction de la correspondance des capteurs et/ou des paramètres environnementaux de l'environnement de travail et/ou des spécifications externes de la machine (M'), en

- déterminant sur la machine (M') les capteurs (S'$_1$,..., S'$_8$) de la machine (M') qui peuvent être associés par paires à un capteur (S$_1$,..., S$_8$) de la machine standard (M$_1$) en ce qui concerne l'agencement et la sensibilité, et en déterminant les spécifications externes et paramètres environnementaux de la machine (M') qui correspondent aux spécifications standard externes et aux paramètres environnementaux de la machine standard (M$_1$) afin d'identifier les règles qui sont utilisées sur la machine standard (M$_1$) et peuvent également être utilisées sur la machine (M'), car les règles concernent les mêmes attributs que sur la machine standard (M$_1$),

- dans lequel les règles de la machine standard (M$_1$) déterminées pour le procédé standard lors de la phase d'apprentissage et mémorisées dans l'aiguillage central sont transférées de manière automatisée au procédé de travail de la machine (M') dans l'environnement de travail, et

- dans lequel la machine (M') est examinée afin de savoir si les règles transmises sont satisfaites par les valeurs de mesure de la machine (M') qui correspondent aux capteurs (S$_1$,..., S$_8$) de la machine standard (M$_1$) en ce qui concerne l'agencement et la sensibilité des capteurs (S'$_1$,..., S'$_8$), et si les règles transmises sont satisfaites par les spécifications externes de la machine (M') qui correspondent aux spécifications standard externes de la machine standard (M$_1$), et

- si tel est le cas, les règles sont adoptées en vue de la caractérisation de l'état de fonctionnement normal du procédé de travail, et

- si tel n'est pas le cas, les règles sont adaptées aux nouvelles valeurs de mesure de la machine (M') et/ou aux nouvelles spécifications externes de la machine (M') lors d'une phase d'apprentissage ou rejetées.

2. Procédé selon la revendication 1, **caractérisé en ce que**

- un examen est mis en œuvre afin de savoir si des capteurs (S$_1$,..., S$_8$) auxquels aucun capteur (S'$_1$,..., S'$_8$) de la machine (M') ne peut être associé en ce qui concerne l'agencement et la sensibilité sont présents dans la machine standard (M$_1$),

- dans lequel, en cas d'absence dans la machine (M') de capteurs (S'$_1$,..., S'$_8$) pouvant être associés, les règles qui s'appliquent auxdits capteurs dans le cas de la machine standard (M$_1$) sont supprimées.

3. Procédé selon la revendication 1 ou 2, **caractérisé en ce qu'**un examen est mis en œuvre afin de savoir si des capteurs (S'$_1$,..., S'$_8$) associés entre eux de la machine (M') présentent la même courbe caractéristique en ce qui concerne la grandeur physique à déterminer,

- dans lequel, dans le cas de capteurs (S'$_1$,..., S'$_8$) associés entre eux de la machine (M') avec une courbe caractéristique différente, les règles qui sont valables pour lesdits capteurs (S$_1$,..., S$_8$) dans le cas de la machine standard (M$_1$) sont adaptées à la nouvelle courbe caractéristique de la machine (M').

4. Procédé selon l'une quelconque des revendications précédentes, **caractérisé en ce que**

- un examen est mis en œuvre afin de savoir si des capteurs (S'$_1$,..., S'$_8$) auxquels aucun capteur (S$_1$,..., S$_8$) de la machine standard (M$_1$) ne peut être associé en ce qui concerne l'agencement et la sensibilité sont présents dans la machine (M'),

- de nouvelles règles caractérisant l'état de fonctionnement normal sont établies pour les valeurs de mesure des capteurs (S'$_1$,..., S'$_8$) ainsi déterminés de la machine (M'),

- dans lequel lesdites règles sont en particulier établies de la même manière que celle utilisée pour l'établissement des règles destinées aux valeurs de mesure du procédé standard,

- dans lequel lesdites règles peuvent en particulier prendre en compte également des valeurs de mesure issues de capteurs (S'$_1$,..., S'$_8$) qui sont présents à la fois sur la machine (M') et sur la machine standard (M$_1$).

5. Procédé selon l'une quelconque des revendications précédentes, **caractérisé en ce que** le procédé de travail au sein duquel la machine (M') ou la machine standard (M$_1$) fonctionne dans un environnement de travail différent de l'environnement standard est défini, dans lequel l'environnement de travail se différencie de l'environnement standard, en particulier en ce qui concerne les paramètres environnementaux ci-dessous :

a) la température ambiante ; et/ou
b) l'humidité ambiante; et/ou
c) la pression de l'air ambiante.

6. Procédé selon l'une quelconque des revendications précédentes, **caractérisé en ce que**, si les règles transmises ne sont pas satisfaites par les spécifications externes de la machine (M') qui correspondent aux spécifications standard externes de la machine standard (M$_1$), de nouvelles règles sont définies pour ces spécifications externes.

7. Procédé selon l'une quelconque des revendications précédentes, **caractérisé en ce que**

- la machine (M') fonctionne dans l'environnement de travail,
- des valeurs de mesure sont déterminées à des moments prédéterminés récurrents pendant le procédé de travail,
- les règles déterminées pour le procédé de travail sont appliquées aux valeurs de mesure, et
- si des valeurs de mesure ne satisfaisant pas les règles destinées au fonctionnement normal sont présentes, un état anormal de la machine (M') et/ou du procédé de travail est identifié.

8. Procédé selon l'une quelconque des revendications précédentes, **caractérisé en ce que** des règles sont déterminées sur au moins deux machines standard (M$_1$, M$_2$), lesquelles règles décrivent la relation entre les valeurs de mesure déterminées pendant l'état de fonctionnement normal des machines standard (M$_1$) dans les environnements de travail concernés et les spécifications externes, et sont satisfaites pendant les états de fonctionnement normaux, et

- dans lequel les règles déterminées pour au moins deux machines standard (M$_1$) sont transférées au procédé de travail d'une machine (M') similaire ou identique aux machines standard (M$_1$) dans l'environnement de travail.

9. Procédé selon l'une quelconque des revendications précédentes, **caractérisé en ce que** des ensembles de règles sont mémorisés dans l'aiguillage central, lesquels ensembles de règles décrivent les relations entre les valeurs de mesure déterminées pendant les états de fonctionnement normaux d'une pluralité de machines standard (M$_1$) dans les environnements de travail concernés et les spécifications externes, et sont satisfaites pendant les états de fonctionnement normaux,

- dans lequel des ensembles de règles appropriés sont sélectionnés pour le procédé de travail d'une machine (M') similaire ou identique aux machines standard (M), et
- dans lequel les ensembles de règles sélectionnés sont transférés au procédé de travail de la machine (M') dans l'environnement de travail.

10. Support de données sur lequel est mémorisé un programme permettant la mise en œuvre d'un procédé selon l'une quelconque des revendications précédentes.

$M_1$

12            14            16

| $\underline{11}$ $S_1, S_2, S_3$ | $S_4$ | $\underline{13}$ $S_5$ | $S_6$ | $\underline{15}$ $S_7$ | $S_8$ | $\underline{17}$ |

## Fig. 1

$M'$

22            26

| $\underline{21}$ $S'_1, S'_2, S'_3$ | $S'_4$ | $\underline{25}$ $S'_7$ | $S'_8$ | $\underline{27}$ |

## Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6760716 B1
- US 20120095582 A1
- EP 2801936 A1
- WO 2016145089 A1
- US 20090292506 A1

**In der Beschreibung aufgeführte Nicht-Patentliteratur**

- **HARTUNG ; JOACHIM ; BÄRBEL ELPELT ; KARL-HEINZ KLÖSENER.** Statistik: Lehr- und Handbuch der angewandten Statistik. Walter de Gruyter, 2009
- **MURPHY, KEVIN P.** Machine learning: a probabilistic perspective. MIT press, 2012
- **GEORGII, HANS-OTTO.** Stochastik: Einführung in die Wahrscheinlichkeitstheorie und Statistik. Walter de Gruyter GmbH & Co KG, 2015
- **HARTUNG ; JOACHIM ; BÄRBEL ELPELT ; KARL-HEINZ KLÖSENER.** Statistik: Lehr-und Handbuch der angewandten Statistik. Walter de Gruyter, 2009
- **FRIEDBERG, IVO et al.** Combating advanced persistent threats: From network event correlation to incident detection.''. *Computers & Security,* 2015, vol. 48, 35-57
- **SKOPIK F. ; FIEDLER R.** *EP 1416597.2-1853 - Method for detecting deviations from a given standard state,* Juni 2016
- **ROJAS, RAUL.** Theorie der neuronalen Netze: eine systematische Einführung. Springer-Verlag, 2013
- **FAHRMEIR, LUDWIG ; THOMAS KNEIB ; STEFAN LANG.** Regression: Modelle, Methoden und Anwendungen. Springer-Verlag, 2007
- **HARTUNG ; JOACHIM ; BÄRBEL ELPELT ; KARL-HEINZ KLÖSENER.** Statistik: lehr-und handbuch der angewandten statistik. Walter de Gruyter, 2009